# EUROPEAN PATENT APPLICATION

(11) **EP 1 457 977 A1**
(43) Date of publication of application: **15.09.2004**
(21) Application number: 02781840.0
(22) Date of filing: 25.11.2002
(51) Int. Cl.: G11B 7/24, G11B 7/26

(54) **METHOD OF REGULATING REFLECTANCE OF WORM TYPE OPTICAL RECORDING MEDIUM AND WORM TYPE OPTICAL RECORDING MEDIUM**

(30) Priority: 29.11.2001 JP 2001365038
(71) Applicant: TDK Corporation, Chuo-ku, Tokyo 103-8272 (JP)
(72) Inventor: MIZUSHIMA, Tetsuro c/o TDK CORPORATION, Chuo-ku, Tokyo 103-8272 (JP); YOSHINARI, Jiro c/o TDK CORPORATION, Chuo-ku, Tokyo 103-8272 (JP)
(74) Representative: Geyer, Ulrich F., Dr. Dipl.-Phys.
(86) International application number: PCT/JP2002/012287
(87) International publication number: WO 2003/046901

(57) **Abstract**

The reflectance of an optical recording medium for which high speed recording using a laser beam with blue wavelength or a shorter wavelength than blue light is possible is adjusted to a predetermined value of no more than 60%.

A recording layer 18 of a high-speed write-once type optical recording medium 10 is formed by laminating first and second sub-recording layers 18A, 18B, each of which contains one type of different metal as a primary component. When laser beam of a blue wavelength is irradiated onto the recording layer 18, the irradiation causes the primary component metals contained within each of the first and second sub-recording layers 18A, 18B to diffuse and mix, and this mixing forms a recording mark with an irreversibly changed reflectance. The recording layer 18 is sandwiched between first and second dielectric layers 20, 16, and by adjusting the material and the thickness of the recording layer 18 and the first and second dielectric layers 20, 16, the reflectance of the unrecorded sections can be adjusted to a value within a range from 5% to 60%.

## Description

### TECHNICAL FIELD

The present invention relates to a method for adjusting the reflectance of a write-once type optical recording medium, particularly an optical recording medium for which high density recording using a laser beam with a shorter wavelength than blue light is possible, as well as a write-once type optical recording medium with a reflectance that has been adjusted using this adjustment method.

### BACKGROUND ART

In recent years, optical recording media capable of high density, high-speed recording have been keenly sought, and optical recording media capable of undergoing recording and playback with laser beam at blue wavelengths are currently attracting attention as one specific solution.

Among the optical recording media utilizing blue wavelength laser beam, playback only (ROM: read only memory) type optical recording media and rewritable (RW) type optical recording media have already been proposed.

However, no write-once type optical media capable of high-speed recording with laser beam of a wavelength shorter than blue wavelengths have yet been proposed.

Conventionally, structures in which an organic dye is applied to a substrate have been proposed as the recording structure in a write-once type optical recording medium. These structures utilize the fact that the dye within the sections irradiated by the laser beam absorbs the light and heats up, and this heat causes a change in the shape or the refractive index of the substrate, and these altered sections are then read as changes in reflectance.

However, when high speed recording is attempted, structures using organic dyes display inadequate recording sensitivity, and if the wavelength of the laser beam is shortened to improve the recording density. Then currently, synthesis of a dye, especially suitable for use with a short wavelength laser beam that is blue or shorter than blue, is difficult.

Structures in which the recording layer is formed from an inorganic material have also been proposed (for example, Japanese Patent Publication No. 1992-838), although all of the current structures have numerous problems, including being unsuitable for high-speed recording, and displaying unsatisfactory storage reliability in a recorded state, and poor playback durability.

From the above circumstances it is evident that currently, a write-once type optical recording medium that displays good storage reliability, is low cost, and is capable of high speed, high density recording and storage, does still not exist.

On the other hand, reflecting the remarkable technical progress of recent years, optical recording media for new standards providing higher levels of performance or more diverse uses continue to appear one after another. However, generally, the market is requiring that drive systems capable of handling products of these new standards are capable of handling not only optical recording media of these new standards, but also products of previous standards.

In addition, in those cases where separate standards exist in parallel with a new standard (for example, standards for read only, or rewritable type media), then the market is also requiring that these optical recording media can also be handled as much as possible.

As a result, in those cases where, for example, information is recorded and played back by forming and detecting changes in reflectance, then if the reflectance varies depending on the type of optical recording medium or on the standard used, the drive system must be equipped with a broadband or multi-band structure capable of dealing with reflectance values from a plurality of standards, which increases the cost. Furthermore, making the drive more compact and lighter weight also becomes difficult.

Conventionally, a method in which the thickness of a dielectric layer in a rewritable type optical recording medium is adjusted is a known example of a technique for simply adjusting the reflectance while maintaining the same basic structure for the optical recording medium.

However, the dielectric layer in a rewritable type medium performs the functions of controlling the quantity of heat that accumulates in the recording layer during recording due to the laser beam, as well as protecting the recording layer from external moisture and the like. Therefore, since there are restrictions on the range of values that can be set for the thickness of the layer, adjustment of the reflectance is limited to a maximum of several % through to approximately 30% (described below in more detail). As a result, conventional systems have been unable to cope with the type of wide range of adjustments that are required to ensure compatibility between read only type reflectance and rewritable type reflectance, for example.

### DISCLOSURE OF THE INVENTION

The present invention aims to resolve the conventional problems described above, with an object of providing a method for adjusting the reflectance of a write-once type optical recording medium, which utilizes an inorganic material, enables high-speed, high density write-once type optical recording using a laser beam with a wavelength that is either blue or an even shorter wavelength (200 to 450 nm), and in particular, is capable of easily and reliably maintaining compatibility with optical recording media of other types in relation to the reflectance, as well as a write-once type optical recording medium with a high level of production flexibility in terms of reflectance adjustment.

This object is achieved by the structures (aspects of the present invention) shown below.

(1) A method for adjusting reflectance of a write-once type optical recording medium. In the method, a laser beam of a wavelength within a range from 200 nm to 450 nm is irradiated onto a laminated recording layer comprising at least two sub-recording layers each of which contains one type of different metal as a primary component, so that the primary component metals contained within each of the sub-recording layers are diffused and mixed. This mixing enables the formation of an irreversible recording mark that has been converted to a single layer and has a lower reflectance than a reflectance of sections not irradiated with the laser beam. A dielectric layer is disposed on at least one side of the laminated recording layer. Furthermore, the reflective state of the laser beam is changed by altering or adjusting at least one factor amongst the material and thickness of the sub-recording layers, and the material and thickness of the dielectric layer, so that the reflectance of those sections not irradiated with the laser beam is adjusted to a predetermined value within a range from 5% to 60%.

The inventors of the present invention discovered that by combining adjustment of the material and/or thickness of the sub-recording layers described above, with adjustment of the material and/or thickness of the dielectric layer, which becomes possible by providing a dielectric layer that is deemed unnecessary in conventional write-once type optical recording media, reflectance adjustment across a previously unattainable wide range becomes possible, while maintaining the stability of the write-once type optical recording medium.

As described above, the degree to which the reflectance can be altered or adjusted by adjusting the material or thickness of a conventional dielectric layer is, at most, a value within a range from several % through to approximately 30% for a rewritable type optical recording medium. For a write-once type medium, and moreover in order to enable a wide range of adjustment between several % and approximately 60%, as in the present invention, the basic structure described above is essential. That is, the structure in which "a laser beam of a wavelength within a range from 200 nm to 450 nm is irradiated onto a laminated recording layer comprising at least two sub-recording layers each of which contains one type of different metal as a primary component, so that the primary component metals contained within each of the sub-recording layers are diffused and mixed, and this mixing enables the formation of an irreversible recording mark that has been converted to a single layer and has a lower reflectance than a reflectance of sections not irradiated with the laser beam (unrecorded sections)".

What is described here as a recording mark includes not only marks formed by simple material mixing, but also marks that are accompanied by deformation of the recording film or the substrate, or changes in the refractive index.

Because of the basic structure described above, an optical recording medium according to the present invention can offer the following advantages over conventional write-once type optical recording media using organic dyes, or conventional rewritable type optical recording media.

Namely, in a conventional optical recording medium using an organic dye material, in order to lower the reflectance (for example, by no more than 20%), techniques such as increasing the thickness of the dye material, or using a dye material with a large light absorption (optical attenuation coefficient) have been used. However, with either technique, the heat capacity of the recording layer increases, and because organic materials generally have a low thermal conductivity, so-called "heat buildup" occurs, increasing the likelihood of problems such as a deterioration in signal quality.

Furthermore, optical recording media using organic dye materials also suffer from little flexibility in terms of design modification. As a practical problem, there may be a case where, for example, optical recording media with different characteristics, including reflectance, are proposed in parallel, and only one is adopted as the formal standard, or, a case where two optical recording media with different reflectance values appear on the market at the same time, and one is adopted as a defacto standard. In these cases, from that points onward, only optical recording media that conform with the standard or the reflectance set by the selected medium must be proposed. In such cases, in the case of optical recording media that use organic dye materials, (because the dye material and the thickness must be designed in accordance with the wavelength of the laser to be used) an optical recording medium designed to conform with a certain standard can become unusable as a commercial product by a shift of 5 nm in the wavelength being used. Therefore, in some cases, large scale design changes across the entire existing production process may be required.

This situation also applies to adjustment of the reflectance, so that adjustment of the reflectance by alteration of the thickness of each layer and selection of the dye material has a large influence on other basic characteristics, meaning such adjustments cannot be made easily.

In addition, in the field of optical recording media using organic dye materials, at present no materials have been developed that can be used, at a practical level, with laser beam of a shorter wavelength than blue light, and consequently, realizing "high density recording" is impractical at present.

On the other hand, in conventional rewritable optical recording media, a low reflectance chalcogenide alloy is used as the material for the recording layer, and consequently adjusting (increasing) the reflectance by altering the thickness of the recording layer is difficult. Furthermore, in a rewritable optical recording medium, the material for the recording layer must be a structure containing amorphous sections formed by rapidly cooling the material from a molten state (a rapidly cooled structure). As a result, the dielectric layer (in an optical recording medium with a structure containing a reflective layer, particularly the dielectric layer on the reflective layer side of the recording layer) has an important role in controlling the accumulated heat, and the thickness of the dielectric layer cannot be altered simply to adjust the reflectance.

Due to these circumstances, conventionally, adjustment of the reflectance while maintaining the same basic structure has been limited to, at most, a value within a range from several % through to approximately 30%.

In contrast, an optical recording medium according to the present invention does not require the use of a rapidly cooled structure, and consequently the thickness of the dielectric layer can be set freely, enabling the reflectance of the unrecorded sections to be set to fundamentally higher levels.

Furthermore, because the recording layer comprises metal materials, the change in reflectance is substantially the same across a wide range of wavelengths, meaning alterations of the wavelength of the laser beam can also be handled with good flexibility, by simply adjusting the optical path length via the thickness of the dielectric layer.

In particular, the merit of being "compatible with laser beam of wavelengths shorter than blue light (200 nm to 450 nm)", which is considered essential for high density recording, is a property that was unachievable with conventional optical recording media using organic dye materials, and the medium displays considerable promise as a next generation, high density optical recording medium.

In addition, because the optical recording medium uses metal materials, the thermal conductivity is high, and even if the thickness of the recording layer is increased, problems such as heat buildup do not occur. As a result, there is a large amount of freedom available for increasing or decreasing the thickness of the recording layer in order to adjust the reflectance. In other words, provided a highly reflective metal is used as the primary component metal of a sub-recording layer, the reflectance can be adjusted across a wide range, while still ensuring the temperature increase necessary for reaction, by altering the thickness of the layer.

Furthermore, the case for the dielectric layer is similar, and in the case of the present invention, (because there are few constraints associated with other characteristics such as control of the heat capacity) the reflectance can be altered by freely adjusting the thickness of, and the material used for, the dielectric layer.

Experiments conducted by the inventors of the present invention have confirmed that, using these techniques, a write-once type optical recording medium according to the present invention, while being an "optical recording medium for high density recording purposes that uses laser beam of 200 to 450 nm," can be adjusted to essentially any reflectance value within a range from 5% to approximately 60%, although the value depends on the combination of primary component metals used.

In general, in media in which the reflectance of the sections irradiated with the laser beam (the recorded sections: recording marks) increase beyond the reflectance of the sections not irradiated with laser beam (the unrecorded sections) (low to high type), because the reflectance before recording is low, the tracking servo signal and the focusing servo signal before recording are small. Furthermore, the reflectance in the prepits is even smaller, and consequently playback of signals retained by prepits is difficult.

However in the present invention, the reflectance of the unrecorded sections is higher than the reflectance after recording (high to low characteristic), and consequently good results are also achieved for playback stability.

Accordingly, by using a method for adjusting reflectance according to the present invention, even with a typical write-once type optical recording medium, the reflectance can be easily set within the vicinity of the reflectance of a rewritable type medium considering the playback compatibility or, to a comparatively higher reflectance that enables a more simple drive design. Furthermore, as a result, production facilities can be adjusted with good flexibility to match the reflectance of the recording medium that dominates the market, without requiring major alterations to the facilities.

The after types of variations can be envisaged for the present invention. The details are described below.

(2) The method for adjusting reflectance of a write-once type optical recording medium according to aspect (1), wherein the reflective state of the laser beam is adjusted by employing one metal selected from the group of high reflectance metals Al, Ag, Au, and Cu as the primary component metal for at least one layer of the aforementioned two sub-recording layers.

(3) The method for adjusting reflectance of a write-once type optical recording medium according to either aspect (1) or aspect (2), wherein, in a case where the optical recording medium comprises a reflective layer in addition to the aforementioned laminated recording layer, the aforementioned dielectric layer is formed at least on the reflective layer side of the laminated recording layer, and in a case where the optical recording medium does not comprise a reflective layer in addition to the aforementioned laminated recording layer, an aforementioned dielectric layer is formed at least on the light incident plane side of the laminated recording layer.

(4) A write-once type optical recording medium having a laminated recording layer comprising at least two sub-recording layers each of which contains one type of different metal as a primary component, wherein a laser beam of a wavelength within a range from 200 nm to 450 nm is irradiated onto the laminated recording layer so that the primary component metals contained within each of the sub-recording layers are diffused and mixed, and this mixing enables the formation of an irreversible recording mark that has been converted to a single layer and has a lower reflectance than sections not irradiated with the laser beam, a dielectric layer is disposed on at least one side of the laminated recording layer, and by altering or adjusting at least one factor among the material and thickness of the sub-recording layers, and the material and thickness of the dielectric layer, the reflectance of those sections not irradiated with the laser beam is set to a predetermined value within a range from 5% to 60%.

(5) The optical recording medium according to aspect (4), wherein at least one layer of the aforementioned two sub-recording layers comprises one metal selected from the group of high reflectance metals Al, Ag, Au, and Cu as the primary component metal.

(6) The optical recording medium according to either aspect (4) or aspect (5), wherein, in a case where the optical recording medium comprises a reflective layer in addition to the aforementioned laminated recording layer, the aforementioned dielectric layer is formed at least on the reflective layer side of the laminated recording layer, and in a case, where the optical recording medium does not comprise a reflective layer in addition to the aforementioned laminated recording layer, an aforementioned dielectric layer is formed at least on the light incident plane side of the laminated recording layer.

### BRIEF DESCRIPTION OF THE DRAWINGS

Fig. 1 is a cross-sectional view showing an enlarged schematic representation of a high-speed write-once type optical recording medium according to an embodiment of the present invention.
Fig. 2 is a graph showing the change in reflectance in the above optical recording medium when the thickness of a sub-recording layer is changed.
Fig. 3 is a graph showing the change in reflectance in the above optical recording medium when the thickness of a second dielectric layer is changed.
Fig. 4 is a graph showing the change in reflectance in the above optical recording medium when the material of the sub-recording layer is altered, and the thickness of the sub-recording layer is changed.
Fig. 5 is a graph showing the change in reflectance in the above optical recording medium when the material of the sub-recording layer is altered again, and the thickness of the second dielectric layer is changed.

### BEST MODE FOR CARRYING OUT THE INVENTION

Hereinafter, embodiments of the present invention will be described in detail, with reference to the drawings.

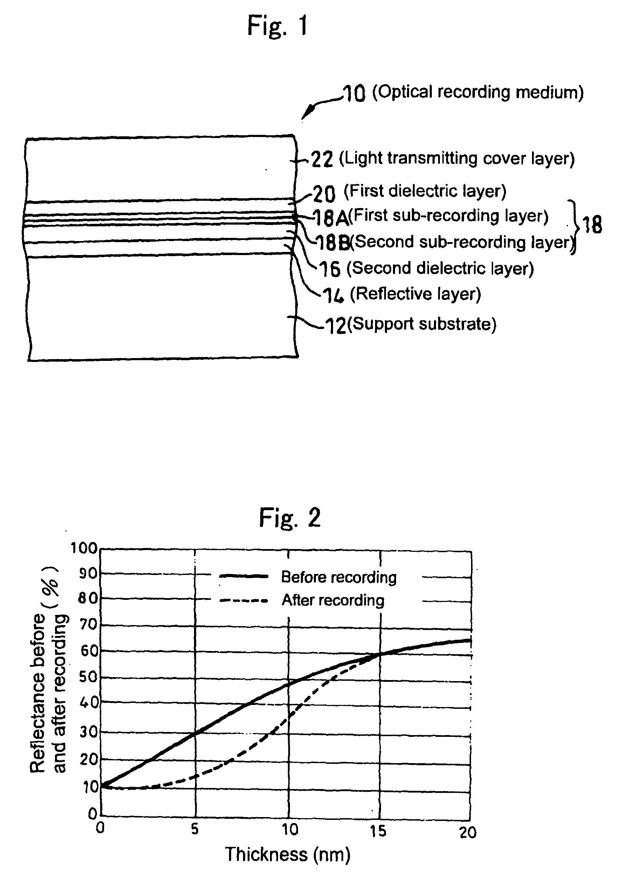

As shown in Fig. 1, a high-speed write-once type optical recording medium (hereafter described as an optical recording medium) 10 to which the present invention is applied comprises a reflective layer 14, a second dielectric layer 16, a recording layer (a laminated recording layer) 18, a first dielectric layer 20, and a light transmitting cover layer 22 provided sequentially on top of a support substrate 12. A blue laser beam of wavelength 405 nm is irradiated from a recording laser beam source through the light transmitting cover layer 22 onto the recording layer 18, so that the reflectance of the irradiated area can be changed, generating a recording mark.

At least one layer (a first sub-recording layer 18A) of the recording layer 18 preferably employs one metal selected from the group comprising the high reflectance metals such as Al, Ag, Au, and Cu as a primary component metal. Of these metals, Al and Ag display particularly high reflectance characteristics relative to lasers of blue wavelengths or shorter, and consequently, adjustment of the reflectance by altering the thickness of the sub-recording layer is easy, and the reflectance of the unrecorded sections can be set to a higher value than the reflectance after formation of a recording mark, which is even more desirable. These points are described below in more detail.

Furthermore, examples of suitable primary component metals for the other layer (a second sub-recording layer 18B) that can be combined with these high reflectance metals include Sb, C, Ge, Ca, Ce, La, Se, and Si.

When a blue laser beam is irradiated onto this recording layer 18 as a recording light, then in the irradiated area, the aforementioned primary component metals contained within the first and second sub-recording layers 18A, 18B diffuse and mix, and the reaction product generated by this mixing alters (lowers) the reflectance of the irradiated area, thereby generating a recording mark.

Within the recording mark, it may be considered that the primary component metals are mixed into a single layer state, which exists either as an intermetallic compound, a mixture in which the primary component metals are bonded together, or as fine particles of the respective metals. In any case, the reaction in which these two primary component metals diffuse and mix is irreversible, meaning the recording layer 18 can be used for write-once type optical recording.

The thickness of the recording layer 18, in other words the combined thickness of the first and second sub-recording layers 18A, 18B is typically from 2 to 50 nm, and preferably from 4 to 20 nm. Qualitatively speaking, if the recording layer 18 (the sub-recording layers 18A, 18B) is too thin, then ensuring an adequate difference in reflectance of the recording marks following recording is difficult, whereas if the recording layer 18 is too thick, the heat capacity of the layer increases, causing a deterioration in the recording sensitivity.

In order to enable favorable adjustment of the reflectance according to the present invention, the thickness of the sub-recording layer (18A or 18B) containing the high reflectance metal as the primary component metal is preferably set within a range from 1 to 15 nm, and even more preferably from 2 to 10 nm.

More specifically, when blue laser beam of wavelength 405 nm is irradiated onto the recording layer 18, a thickness should be selected from within the above range that enables the primary component metals or alloys thereof that make up the first and second sub-recording layers 18A, 18B to mix and form a recording mark at a recording transfer rate of 35 Mbps (or higher), thereby enabling recording. What is described here as a recording transfer rate of 35 Mbps refers to a recording transfer rate that takes efficiency into consideration, under a condition where the (1.7) RLL modulation is used, a channel bit length is 0.12 µm, a recording linear velocity is 5.3 m/s, a channel clock is 66 MHz, and the format efficiency is 80%.

The first and second dielectric layers 20, 16 are formed from any of a variety of dielectric materials such as oxides, sulfides, nitrides, fluorides, carbides, or mixtures thereof. Specifically, in this embodiment, the first and second dielectric layers 20, 16 are both formed by sputtering using a ZnS-SiO₂ target (ZnS: 80 mol%, SiO₂: 20 mol%).

The first dielectric layer 20 is formed with a thickness of 5 to 200 nm so as to sandwich the recording layer 18 between the first dielectric layer 20 and the second dielectric layer 16. The second dielectric layer 16 is provided on top of the reflective layer 14, and has a thickness of 5 to 200 nm.

By adjusting the thickness of the first and second dielectric layers 20, 16, these layers cause interference of the laser beam, enabling adjustment of the reflectance at unrecorded sections in the recording layer 18, and enabling an increase in the difference in reflectance between before and after recording. These points are described below in more detail.

Furthermore, in addition to enabling adjustment of the reflectance, the first and second dielectric layers 20, 16 also perform the role of protecting the recording layer 18 from water vapor and other gases.

The support substrate 12 is formed from, for example, a polycarbonate of thickness 1.1 mm.

Furthermore, the reflective layer 14 is a layer of silver alloy or the like, formed on top of the support substrate using a sputtering method or the like, with a thickness of 10 to 200 nm. When viewed from the laser beam incident side, this reflective layer 14 is positioned behind the recording layer 18. By supplying return light to the recording layer 18, the reflective layer 14 increases the difference in reflectance between before and after recording, and furthermore, contributes to increasing the recording sensitivity. The reflective layer 14 is formed from a metal (including metalloids) film or a dielectric multi-layered film. In this embodiment, the reflective layer 14 is formed from silver alloy with a thickness of 100 nm. However as will become evident in the examples described below, this reflective layer 14 is not necessarily required.

The light transmitting cover layer 22 is formed on top of the first dielectric layer 20, either by spin coating or by bonding a preformed sheet member. The light transmitting cover layer 22 comprises, for example, an ultraviolet light curing resin layer or a polycarbonate sheet. The thickness of the light transmitting cover layer 22 is selected so that, when the numerical aperture (NA) of an objective lens used in irradiating, for example, blue laser beam of wavelength 405 nm onto the recording layer 18 is 0.85, the combined thickness with the first dielectric layer 20 is able to converge the blue laser beam onto the recording layer 18. Under these conditions, a specific thickness is approximately 100 µm.

In the optical recording medium 10 according to this embodiment, when laser beam is irradiated, it may be thought that the primary component metals of the first and second sub-recording layers 18A, 18B each undergo diffusion to form a mixed state, and either exist as an intermetallic compound, or even if an intermetallic compound is not generated, at least exist as a mixture in which the primary component metals are bonded together or as fine particles of the respective metals.

For example, in the case of a recording layer 18 formed from a first sub-recording layer 18A comprising Al as the primary component and a second sub-recording layer 18B comprising Sb as the primary component, it may be thought that the intermetallic compound AlSb is generated. The reaction products generated by this mixing change the reflectance of the irradiated area, and this change in reflectance can be used as a recording mark (described below in more detail).

Furthermore, particularly in an optical recording medium 10 formed from sub-recording layers comprising Al and Sb as the primary components, the thermal stability of the reaction products within recording marks formed on the recording layer 18 is greater than the thermal stability of the laminated, unrecorded sections of the first and second sub-recording layers 18A, 18B.

Specifically, this means that if a recording light (laser beam) of a power level sufficient for forming recording marks is irradiated onto a recording layer 18 on which recording marks have already been formed, then the aforementioned mixing and change in reflectance described above occurs in those areas of the recording layer 18 that have not been subjected to prior mixing, whereas in those areas in which a recording mark has already been formed, the irradiation of the recording light causes no change in the reflectance. It could be said that this represents an ideal characteristic for a write-once type optical recording medium.

To discuss this fact in more detail, in the case of an Al-Sb combination, the melting point of Al is 660°C, and the melting point of Sb is 631°C, so that both of these metals display adequate thermal stability in a simple state, and are able to be melted by irradiation with laser beam. Furthermore, reaction of Sb and Al generates an intermetallic compound AlSb (melting point: 1060°C), which has a much higher melting point than either of the simple metals, and is stable at both low and high temperatures, with no change in the crystalline structure. Intermetallic compounds such as this AlSb need not undergo crystal growth, and even if they exist in a micro crystalline state that cannot be detected by X-ray diffraction, recording is still possible.

Accordingly, even if the optical recording medium 10 is stored in a high temperature environment after recording, the recording marks formed from the above reaction product remain stable and are unlikely to change. When the formed recording marks are read, although generally a comparatively low power playback laser is irradiated onto the medium, the temperature of the recording layer 18 rises several dozen °C in the irradiated areas. As a result, in the case of recording marks of low thermal stability, playback, particularly repeated playback, can cause changes to the recording marks. However, in this optical recording medium 10, the recording marks are very unlikely to change under playback, and display excellent playback durability. In addition, even if the reflectance after formation of a recording mark is set to decrease, and the absorption of light after formation of the recording mark is increased, because the thermal stability of the recording mark is high, no deterioration occurs under irradiation with playback laser beam.

Furthermore, because the thermal stability of the recording marks is high, the phenomenon in which recording results in the deletion of recording marks in an adjacent track (cross erase) does not occur substantially. As a result, the recording track pitch can be narrowed, which is effective for high density recording.

### [Example 1]

For the optical recording medium 10 described above, characteristics were evaluated for the relationship between the thickness of the recording layer 18 comprising a high reflectance metal as the primary component, and the reflectance.

The specific structure of each layer of the optical recording medium 10 for these evaluations is shown below.
Reflective layer 14: not formed
Dielectric layers 16, 20: ZnS + SiO₂ (80:20 mol%)
First dielectric layer 20: 40 nm, second dielectric layer 16: 80 nm
First sub-recording layer 18A: AlCr (98:2 at%)
Second sub-recording layer 18B: Sb 10 nm

The thickness of the first sub-recording layer 18A was varied within a range from 0 to 20 nm.

Using an evaluation apparatus with a laser beam of wavelength 405 nm, recording was conducted under measurement conditions including a linear velocity of 5.3 m/s (35 Mbps) and a laser output of 10 mW, and the reflectance before and after formation of recording marks was measured.

In general, in media in which the reflectance of the sections irradiated with the laser beam (the recorded sections) increase beyond the reflectance of the sections not irradiated with laser beam (the unrecorded sections) (low to high type), because the reflectance before recording is low, the tracking servo signal and the focusing servo signal before recording are small. Furthermore, the reflectance in the prepits is even smaller, and consequently playback of signals retained by prepits is difficult.

Accordingly, in the present invention (including this example), media is assumed to be the type in which the reflectance decreases in the areas irradiated with the laser beam (high to low type).

The results are shown in Fig. 2.

In Fig. 2, the horizontal axis shows the thickness (nm) of the first sub-recording layer 18A comprising Al as the primary component, and the vertical axis shows the reflectance (%). The solid line in the figure shows the reflectance at the unrecorded sections, and the dashed line shows the reflectance at the recorded sections (recording marks).

In this embodiment (example), it is evident that because one of the sub-recording layers 18 is formed using high reflectance Al as the primary component metal, by changing the thickness of the sub-recording layer 18, the reflectance of the unrecorded sections can be easily adjusted within a range from 10 to 60%. Furthermore, even though a reflective layer 14 is not used, it is also evident that a difference in reflectance (before and after formation of a recording mark) can be obtained that is readily detectable as a high to low type signal. Particularly large differences in reflectance can be achieved for reflectance values within ranges from 15 to 20% and 30 to 50%.

However, if the thickness of the sub-recording layer was 15 nm or greater, because the heat capacity of the recording layer is large, the evaluation apparatus was unable to perform the recording, and even at thickness values of 11 nm and greater, satisfactory recording could not be achieved, and the reduction in reflectance after recording relative to that before recording was small. Furthermore, it was also evident that in order to achieve a difference in reflectance, a thickness of at least 2 nm was required.

The above result, namely the result that the reflectance of the unrecorded sections could be easily adjusted within a range from 10 to 60%, provides an extremely significant effect from a practical viewpoint.

For example, basically if the reflectance is high, then the servo signal is easily taken and the drive system can be more easily designed. Generally it is said that if the reflectance is set to at least 30%, then the burden on the drive system is minimal, and higher quality recording and playback can be achieved. In conventional write-once type optical recording media (CD-R, DVD-R), in order to ensure compatibility with ROM (playback only: high reflectance) media, the reflectance is usually set slightly higher (for example, 45 to 85% in the case of DVD-R).

Using this optical recording medium 10, to design a system that is compatible with this type of optical recording medium and reflectance, by setting the thickness of the sub-recording layer 18 to at least 5 nm for example, a drive system can be easily designed and constructed as a high reflectance optical recording medium with a reflectance for blue wavelength light of at least 30%. Even in cases in which the reflectance must be set to 45% or more to ensure compatibility with DVD-R, this can be satisfactorily achieved by setting the thickness of the sub-recording layer 18 to 9 nm or greater.

In contrast, in terms of standards for DVR using laser beam of a blue wavelength, based on previous RW (rewritable) type media it could be predicted that the design of the reflectance of the optical recording medium will require a considerably lower (for example, 15 to 20%) value. However, in the optical recording medium according to this example, it is evident from the graph of Fig. 2 that, for example, by setting the thickness of the sub-recording layer 18 to approximately 2.5 nm, the reflectance of the unrecorded sections can be easily adjusted to a value within this range, namely within a range from 15 to 20%. As a result, a shared system for ROM (playback only), RW (rewritable) and WO (write-once) type media can be designed and constructed with ease.

### [Example 2]

Next is a description of another example in which the reflectance is adjusted.

If the thickness of the recording layer of an optical recording medium 10 is set to no more than 20 nm, and a reflective layer 14 is formed, then the reflectance of the optical recording medium 10 is largely controlled by the reflection at the interface between the reflective layer 14 and the second dielectric layer 16.

An evaluation was conducted of the reflectance characteristics when the thickness of the second dielectric layer 16 was varied. The conditions for the tests were as follows, and other conditions were the same as those described above for the example 1.

Reflective layer 14: silver alloy AgPdCu (98:1:1 at%) 100 nm
First dielectric layer 20: 55 nm (fixed)
Second dielectric layer 16: 5 to 200 nm
First sub-recording layer 18A: AlCr (98:2 at%) 4 nm
Second sub-recording layer 18B: Sb 6 nm

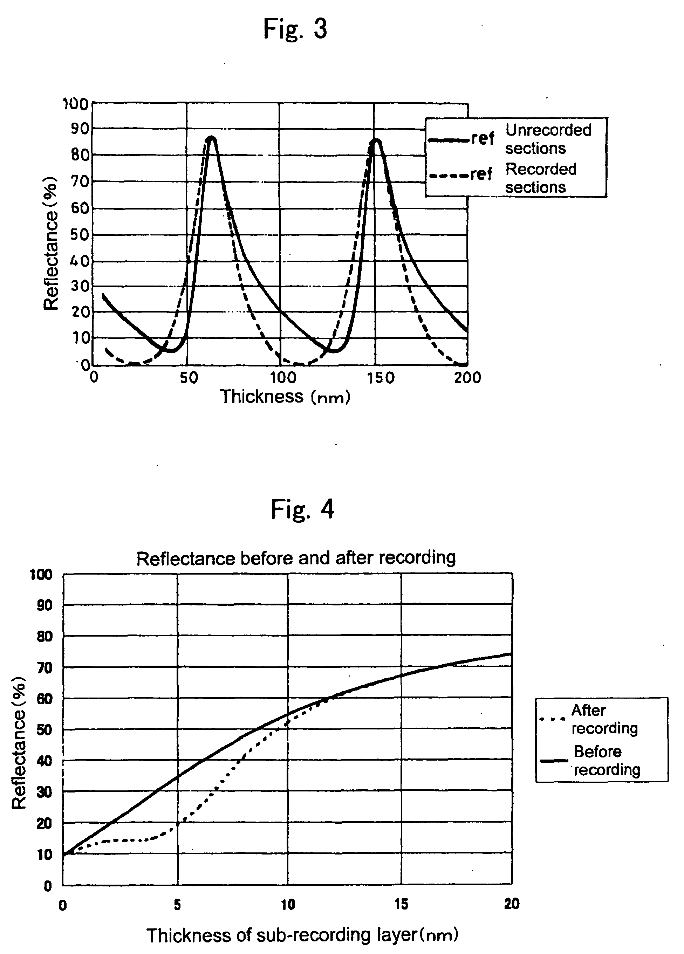

The results of the tests are shown in Fig. 3.

In Fig. 3, the horizontal axis shows the thickness (nm) of the second dielectric layer 16, and the vertical axis shows the reflectance (%). Furthermore, the solid line in the figure shows the reflectance at the unrecorded sections, and the dashed line shows the reflectance at the recorded sections (recording marks).

Incidentally, in this example, because the laminated recording layer is formed from a first sub-recording layer 18A comprising Al as the primary component, and a second sub-recording layer 18B comprising Sb as the primary component, the reflectance of the recording marks (the recorded sections) can be easily set to a lower value than the reflectance of the unrecorded sections.

Returning to the graph of Fig. 3, those sections where the reflectance of the recorded sections is lower than the reflectance of the unrecorded sections correspond with the regions that can be used as a high to low type optical recording medium. Based on determinations from the graph, it can be surmised that values (thickness values) within ranges from 5 to 30 nm, and from 85 to 115 nm, are thickness values capable of achieving good practical results.

From the graph it is clear that for thickness values of 150 nm and greater, "the reflectance of the recorded sections is lower than the reflectance of the unrecorded sections". However, if the thickness of the second dielectric layer 16 exceeds 150 nm, then other problems arise including unfavorable production conditions and increased stress, and consequently this thickness range cannot necessarily be termed favorable.

Because the refractive index of the ZnS + SiO₂ material of the second dielectric layer 16 is 2.3, if the above ranges are converted to optical path lengths, they correspond with values from 10 to 70 nm, and from 190 to 270 nm respectively.

In cases in which the second dielectric layer 16 is prepared from a plurality of layers, the above ranges can be expressed as 10<Σnt<70 and 190<Σnt<270, where n is the refractive index and t is the thickness (nm) of each layer. Of course if the material (refractive index) of the second dielectric layer 16 is changed, then the thickness required will also change depending on the material.

As is evident from the graph, even in this example, by setting the thickness of the second dielectric layer 16 to a value within this range, the reflectance for unrecorded sections of an optical recording medium can be easily set to any value within a range from 5 to 60%, while maintaining conditions capable of ensuring a reasonable difference for high to low type (or low to high type) media.

For example, by selecting a thickness for the second dielectric layer 16 between approximately 85 and 90 nm, a drive system can be easily designed and constructed as a high reflectance optical recording medium with a reflectance for blue wavelength light of at least 30%. Even in cases in which the reflectance must be set to 45% or more to ensure compatibility with DVD-R, by conducting tests of slightly more precise thickness (and/or refractive indexes) and reflectance values within this vicinity, design is still readily achievable up to values of approximately 60%.

On the other hand, it is also evident that by selecting a thickness for the second dielectric layer 16 of approximately 100 nm, the reflectance within the unrecorded sections can be easily held within this range, namely from 15 to 20%. From these results it is clear that a shared system for ROM (playback only), RW (rewritable) and WO (write-once) type media can also be easily designed and constructed by adjusting the thickness of this second dielectric 20.

### [Example 3]

For the optical recording medium 10 described above, factors such as the material of the second sub-recording layer 18B were altered, and the characteristics were evaluated for the relationship between the thickness of the recording layer 18, comprising a high reflectance metal as the primary component, and the reflectance. The structure of each layer of the optical recording medium 10 for these evaluations is shown below. A reflective layer was not provided.
Dielectric layers: ZnS + SiO₂ (80:20 mol%)
First dielectric 20: 60 nm,
Second dielectric 16: 60 nm
First sub-recording layer 18A: AlCr (98:2 at%)
Second sub-recording layer 18B: C 8 nm

The thickness of the first sub-recording layer 18A was varied within a range from 0 to 20 nm.

Using the evaluation apparatus with a wavelength of 405 nm, recording was conducted under measurement conditions including a linear velocity of 5.3 m/s and a laser output of 10 mW, and the reflectance before and after recording was measured. The results are shown in Fig. 4.

Because the first sub-recording layer 18A is formed using the high reflectance metal Al as the primary component metal, it is clear that the reflectance of the unrecorded sections can also be easily adjusted within a range from 10 to 60% by altering the thickness of the sub-recording layer. Furthermore, even without using a reflective layer, a difference in reflectance can be achieved that is adequate for detection as a high to low type optical recording medium.

However, when the second sub-recording layer 18B is formed from C, then because the quantity of heat required for recording is greater than for Sb, if the thickness was 11 nm or greater then the evaluation apparatus was unable to perform the recording, and the decrease in reflectance after recording was almost non-existent. Furthermore, it was also evident that in order to achieve a difference in reflectance, a thickness of at least 2 nm was required.

### [Example 4]

For the optical recording medium 10 described above, factors such as the materials of the first and second sub-recording layers 18A, 18B were altered again, and the characteristics were evaluated for the relationship between the thickness of the second dielectric layer 16 and the reflectance. The structure of each layer of the optical recording medium 10 for these evaluations is shown below.
Reflective layer 14: silver alloy AgPdCu (98:1:1 at%)
Dielectric layers: ZnS + SiO₂ (80:20 mol%)
First dielectric 20: 80 nm
First sub-recording layer 18A: Cu 4 nm
Second sub-recording layer 18B: Ge 8 nm

The thickness of the second dielectric 16 was varied within a range from 5 to 200 nm.

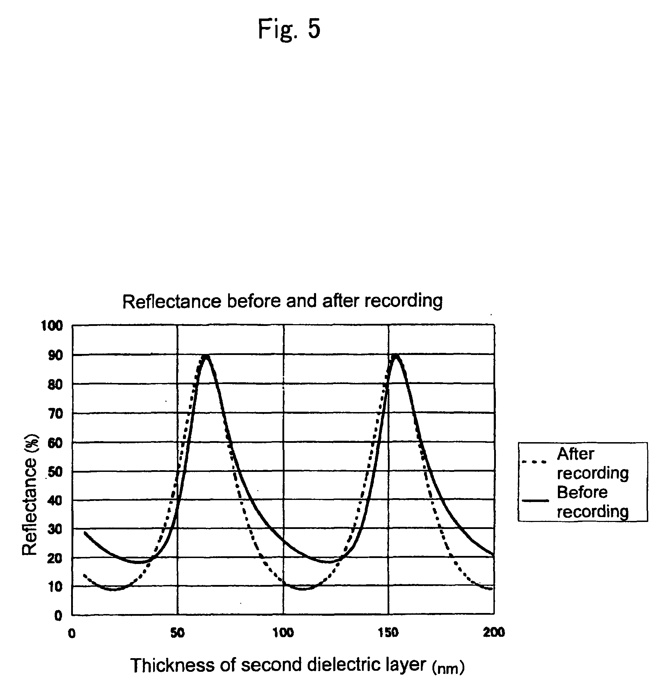

Using the evaluation apparatus with a wavelength of 405 nm, recording was conducted under measurement conditions including a linear velocity of 5.3 m/s and a laser output of up to 10 mW, and the reflectance before and after recording was measured. The results are shown in Fig. 5.

Even when Cu and Ge are used as the materials for the sub-recording layers, it is evident that by adjusting the thickness of the second dielectric layer 16 in the same manner as the example 2 (Al-Sb), the reflectance of the unrecorded sections can be set to an arbitrary value, while maintaining a high to low type signal output.

In the optical recording medium 10 according to the above embodiment (or examples), the recording layer 18 was provided between the first and second dielectric layers 20, 16, but the present invention is not limited to this structure, and a dielectric layer need not necessarily be provided on both sides.

In order to more efficiently perform the adjustment of the reflectance according to the present invention, in those cases in which a reflective layer is provided, it is preferable that a second dielectric layer 16 (the dielectric layer on the reflective layer side of the laminated recording layer), which has a particularly large adjustment effect, is provided. In contrast, in those cases in which a reflective layer is not provided, the effect of the first dielectric layer 20 (the dielectric layer on the light incident plane side of the laminated recording layer) is large, and so at least the first dielectric layer 20 is preferably provided.

The optical path lengths of the first and second dielectric layers 20, 16 (the thickness and the refractive index of the materials) can also cause changes in the light interference conditions, enabling adjustment of the reflectance of the unrecorded sections (and the recording marks). In addition, the reflectance can also be adjusted, and the difference in reflectance between the unrecorded sections and the recording marks can be increased, by optimizing the mutual optical path length for the first dielectric layer 20 and the second dielectric layer 16, or by dividing the dielectric layer into a plurality of layers. As a result, in order to ensure effective adjustment of the reflectance according to the present invention, a reflective layer is preferably provided, and dielectric layers are preferably provided on both sides of the laminated recording layer.

Furthermore, in the above embodiment, the recording layer 18 was formed from the first and second sub-recording layers 18A, 18B. However, any recording layer 18 that comprises at least two sub-recording layers is suitable, and three or more sub-recording layers are also possible, and either of the sub-recording layers can be positioned on the light incident side of the medium. In addition, the first and second sub-recording layers 18A, 18B that form the recording layer 18 may either contain only the respective primary component metals, or may also comprise other added elements. However as described above, at least one layer of the recording layer 18 preferably comprises a high reflectance metal Al, Ag, Au or Cu as the primary component. Al or Ag display particularly high reflection characteristics for lasers of blue wavelength or shorter, and consequently offer easy adjustment of the reflectance by altering the thickness of the sub-recording layer, and moreover, they also enable the reflectance of the unrecorded sections to be set higher than the reflectance after formation of a recording mark, and are consequently very much preferred.

Furthermore, in the recording layer 18 of the above embodiment, the first sub-recording layer 18A and the second sub-recording layer 18B were in direct contact. However, an intermediate layer comprising another element as the primary component can also be provided between the two layers.

Furthermore, in the above embodiment, a reflective layer 14 formed from silver alloy was used. However, but the present invention is not limited to this case. Furthermore, a reflective layer need not necessarily be used. However as described above, in order to ensure effective adjustment of the reflectance, a reflective layer is preferably provided. Any material that reflects the recording and playback light can be used as the reflective layer material, and metal (including metalloid) films, and dielectric multi-layered films are suitable.

In addition, in the above embodiment, when information was actually recorded onto the optical recording medium 10, the recording rate was set to 35 Mbps and the wavelength of the laser beam was set to a blue wavelength of 405 nm. However, both the recording rate and the laser wavelength can be set to larger (or smaller) values.

In the example 2, for the samples in which the thickness of the second dielectric layer 16 was from 90 to 115 nm, good recording characteristics were also achieved at a recording rate of 70 Mbps (linear velocity 10.6 m/s). In fact it could be argued that the advantages of the present invention are most effective in this type of high speed recording.

Furthermore in terms of laser wavelength, because metal materials that are applicable to a wide wavelength region are used in the recording layer, by adjusting the thickness of the dielectric layer for each wavelength, the reflectance can be adjusted across a wide range while maintaining a practical level of signal characteristics, even for the wavelength range from 200 to 450 nm for which adequate signal characteristics cannot be obtained using organic dye materials.

It has also been confirmed that the optical recording medium 10 described above is capable of achieving the same effects as those described above for laser beam of red wavelengths (specifically, laser beam of wavelengths up to approximately 700 nm), longer than the aforementioned blue wavelengths. Accordingly, the above optical recording medium 10 can be applied to a red wavelength laser irradiation system, in those cases where costs must be reduced for example.

In the present invention, adjustment of the reflectance need not necessarily be possible right across the range from 5% to 60%, namely, the reflectance selected as the targeted level of adjustment need only fall within the above range.

### INDUSTRIAL APPLICABILITY

According to the present invention, high speed, high density write-once type optical recording is possible using a variety of laser beams including blue light, and light of even shorter wavelengths. In particular, a write-once type optical recording medium can be obtained that can maintain good compatibility with other types of optical recording media in relation with the reflectance.

## Claims

1. A method for adjusting reflectance of a write-once type optical recording medium, wherein
a laser beam of a wavelength within a range from 200 nm to 450 nm is irradiated onto a laminated recording layer comprising at least two sub-recording layers, each of which contains one type of different metal as a primary component, so that the primary component metals contained within each of the sub-recording layers are diffused and mixed,
this mixing enables formation of an irreversible recording mark that has been converted to a single layer and has a lower reflectance than a reflectance of sections not irradiated with the laser beam,
a dielectric layer is disposed on at least one side of the laminated recording layer, and
a reflective state of the laser beam is changed by altering or adjusting at least one factor among a material and a thickness of the sub-recording layers, and a material and a thickness of the dielectric layer, so that the reflectance of sections not irradiated with the laser beam is adjusted to a predetermined value within a range from 5% to 60%.

2. The method for adjusting reflectance of a write-once type optical recording medium according to claim 1, wherein
a reflective state of the laser beam is adjusted by employing one metal selected from the group of high reflectance metals including Al, Ag, Au, and Cu as the primary component metal for at least one layer of the sub-recording layers.

3. The method for adjusting reflectance of a write-once type optical recording medium according to either claim 1 or claim 2, wherein
in a case where the optical recording medium comprises a reflective layer in addition to the laminated recording layer, the dielectric layer is formed at least on the reflective layer side of the laminated recording layer, and in a case where the optical recording medium does not comprise a reflective layer in addition to the laminated recording layer, the dielectric layer is formed at least on a light incident plane side of the laminated recording layer.

4. A write-once type optical recording medium having a laminated recording layer comprising at least two sub-recording layers, each of which contains one type of different metal as a primary component, wherein
a laser beam of a wavelength within a range from 200 nm to 450 nm is irradiated onto the laminated recording layer so that the primary component metals contained within each of the sub-recording layers are diffused and mixed,
this mixing enables formation of an irreversible recording mark that has been converted to a single layer and has a lower reflectance than sections not irradiated with the laser beam, and
a dielectric layer is disposed on at least one side of the laminated recording layer, and
by altering or adjusting at least one factor among a material and a thickness of the sub-recording layers, and a material and a thickness of the dielectric layer, a reflectance of sections not irradiated with the laser beam is set to a predetermined value within a range from 5% to 60%.

5. The write-once type optical recording medium according to claim 4, wherein
at least one layer of the sub-recording layers comprises one metal selected from the group of high reflectance metals including Al, Ag, Au, and Cu as the primary component metal.

6. The write-once type optical recording medium according to claim 4 or claim 5, wherein in a case where the optical recording medium comprises a reflective layer in addition to the laminated recording layer, the dielectric layer is formed at least on the reflective layer side of the laminated recording layer, and in a case where the optical recording medium does not comprise a reflective layer in addition to the laminated recording layer, the dielectric layer is formed at least on a light incident plane side of the laminated recording layer.
